# EUROPÄISCHE PATENTANMELDUNG

(11) **EP 1 031 462 A2**
(43) Veröffentlichungstag der Anmeldung: **30.08.2000**
(21) Anmeldenummer: 00102356.3
(22) Anmeldetag: 04.02.2000
(51) Int. Cl.: B60Q 1/30

(54) **Leuchtenanordnung für Kraftfahrzeuge**

(30) Priorität: 22.02.1999 DE 29903080 U
(71) Anmelder: REITTER & SCHEFENACKER GmbH & Co. KG, D-73730 Esslingen (DE)
(72) Erfinder: Zimmermann, Werner, 73113 Ottenbach (DE); Gampp, Doris, 73734 Esslingen (DE)
(74) Vertreter: Kohl, Karl-Heinz

(57) **Zusammenfassung**

Die Leuchtenanordnung hat einen Kofferraumdeckel (2) bzw. eine Heckklappe und Heckleuchten (4). Um die in den Kofferraum führende Ladeöffnung optimal zum Beladen des Kofferraumes ausnutzen zu können, ohne die Sicherungsfunktion des Kraftfahrzeuges bei geöffnetem Kofferraumdeckel bzw. geöffneter Heckklappe zu beeinträchtigen, sind die Heckleuchten (4) am Kofferraumdeckel (2) bzw. an der Heckklappe vorgesehen. Die Leuchtenanordnung ist so ausgebildet, daß sie bei geöffnetem Kofferraumdeckel (2) bzw. geöffneter Heckklappe Licht nach hinten abstrahlt. Dadurch kann das parkende Kraftfahrzeug zuverlässig erkannt werden. Für die Heckleuchten (4) ist kein zusätzlicher Einbauraum im Heckbereich des Kraftfahrzeuges erforderlich. Daher hat die Ladeöffnung maximal mögliche Breite.

## Beschreibung

Die Erfindung betrifft eine Leuchtenanordnung für Kraftfahrzeuge nach dem Oberbegriff des Anspruches 1.

Solche Leuchtenanordnungen haben im Heckbereich angeordnete Heckleuchten, die entweder im Bereich neben dem Kofferraumdeckel bzw. der Heckklappe des Fahrzeuges angeordnet sind oder von denen ein Teil am Kofferraumdeckel bzw. an der Heckklappe und ein anderer Teil am karosserieseitigen Heckbereich des Kraftfahrzeuges vorgesehen ist. In beiden Fällen wird durch diese Ausbildung der Leuchtenanordnung die Querschnittsbreite der in den Kofferraum führenden Ladeöffnung verringert. Dadurch gestaltet sich das Be- und Entladen des Kraftfahrzeuges umständlich und schwierig. Zudem kann durch die verringerte Querschnittsbreite der Ladeöffnung breites Ladegut nicht oder nur schwierig in den Kofferraum geladen werden.

Der Erfindung liegt die Aufgabe zugrunde, die gattungsgemäße Leuchtenanordnung so auszubilden, daß die in den Kofferraum führende Ladeöffnung optimal zum Beladen des Kofferraumes ausgenutzt werden kann, ohne die Sicherungsfunktion des Kraftfahrzeuges bei geöffnetem Kofferraumdeckel bzw. geöffneter Heckklappe zu beeinträchtigen.

Diese Aufgabe wird bei der gattungsgemäßen Leuchtenanordnung erfindungsgemäß mit den kennzeichnenden Merkmalen des Anspruches 1 gelöst.

Bei der erfindungsgemäßen Leuchtenanordnung sind die Heckleuchten am Kofferraumdeckel bzw. an der Heckklappe vorgesehen. Wird der Kofferraumdeckel bzw. die Heckklappe geöffnet, ist die Leuchtenanordnung so ausgebildet, daß sie dennoch Licht nach hinten abstrahlt, so daß das parkende Kraftfahrzeug zuverlässig erkannt werden kann. Da die Heckleuchten am Kofferraumdeckel bzw. an der Heckklappe vorgesehen sind, ist für die Heckleuchten zusätzlicher Einbauplatz im karosserieseitigen Heckbereich des Kraftfahrzeuges nicht erforderlich. Darum hat die in den Kofferraum führende Ladeöffnung des Kraftfahrzeuges die maximal mögliche Breite. Der Kofferraum läßt sich dadurch einfach beladen, auch wenn das Ladegut sehr breit ist.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in schematischer Darstellung den hinteren Teil eines Kraftfahrzeuges mit einer erfindungsgemäßen Leuchtenanordnung,
- Fig. 2: in vereinfachter und perspektivischer Darstellung eine Rückansicht eines mit einer erfindungsgemäßen Leuchtenanordnung ausgestatteten Kraftfahrzeuges, dessen Heckklappe geschlossen ist,
- Fig. 3: das Kraftfahrzeug gemäß Fig. 2 mit geöffneter Heckklappe,
- Fig. 4 und Fig. 5: in Darstellungen entsprechend den Fig. 2 und 3 eine weitere Ausführungsform einer erfindungsgemäßen Leuchtenanordnung,
- Fig. 6 bis Fig. 8: jeweils in Darstellungen entsprechend Fig. 3 weitere Ausführungsformen von erfindungsgemäßen Leuchtenanordnungen, die an Kraftfahrzeugen vorgesehen sind,
- Fig. 9: in schematischer Darstellung und in Seitenansicht den hinteren Teil eines Kraftfahrzeuges mit geöffneter Heckklappe, an der eine erfindungsgemäße Leuchtenanordnung vorgesehen ist,
- Fig. 10: in vergrößerter Darstellung die erfindungsgemäße Leuchtenanordnung gemäß Fig. 9.

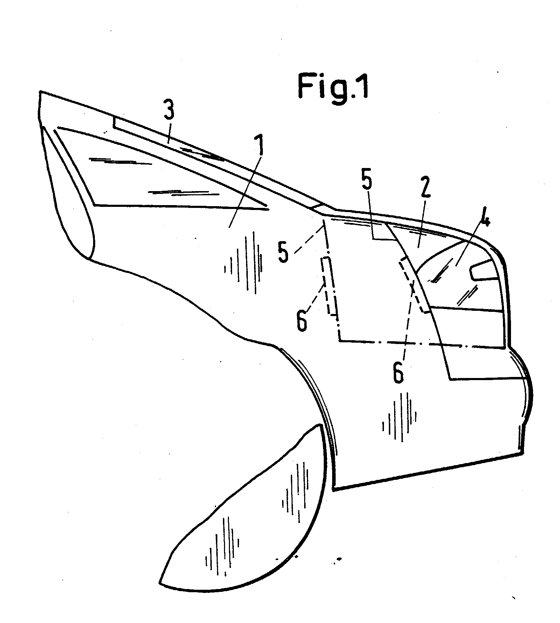

Fig. 1 zeigt den rückwärtigen Teil eines Kraftfahrzeuges mit einem Kofferraumdeckel 2 in Schließstellung. Mit ausgezogenen Linien ist eine erste Ausführungsform und mit strichpunktierten Linien eine zweite Ausführungsform der Gestaltung des Kofferraumdeckels 2 dargestellt. Bei der mit strichpunktierten Linien angedeuteten Form ist der Kofferraumdeckel 2 seitlich sehr weit nach hinten in Richtung auf die Heckscheibe 3 heruntergezogen. In den Kofferraumdeckel 2 ist eine Heckleuchte 4 integriert, die in bekannter Weise ein Bremslicht, ein Blinklicht, ein Schlußlicht und ein Rückfahrlicht enthält. Da die Heckleuchte 4 in den Kofferraumdeckel 2 integriert ist, wird die Heckleuchte 4 beim Öffnen des Kofferraumdeckels 2 entsprechend nach oben bewegt. Damit bei geöffnetem Kofferraumdeckel 2 das Kraftfahrzeug auch bei Nacht noch erkennbar ist, ist am Öffnungsrand 5 der Ladeöffnung 11 des Kraftfahrzeuges eine Sicherheitsleuchte 6 vorgesehen, die zumindest ein Blinklicht und ein Schlußlicht enthält. Da diese Sicherheitsleuchte 6 am Rand der Ladeöffnung des Kraftfahrzeuges vorgesehen ist, kann die gesamte Heckleuchte 4 in den Kofferraumdeckel 2 integriert werden. Dadurch steht die gesamte Breite der in den Kofferraum führenden Ladeöffnung 11 des Kraftfahrzeuges zum Beladen zur Verfügung.

Auch bei der mit strichpunktierten Linien angedeuteten Ausbildung des Kofferraumdeckels 2 befindet sich am Öffnungsrand 5 des Kraftfahrzeuges eine solche Sicherheitsleuchte 6. Im Unterschied zu der mit ausgezogenen Linien dargestellten Ausführungsform des Kofferraumdeckels ist dadurch die Möglichkeit gegeben, daß der Kofferraum des Kraftfahrzeuges auch von der Seite her zugänglich ist.

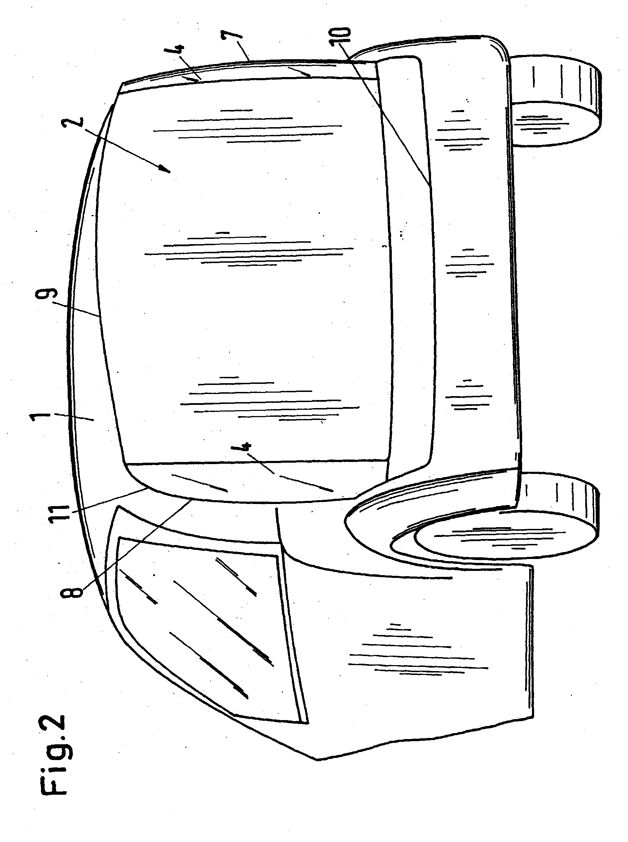

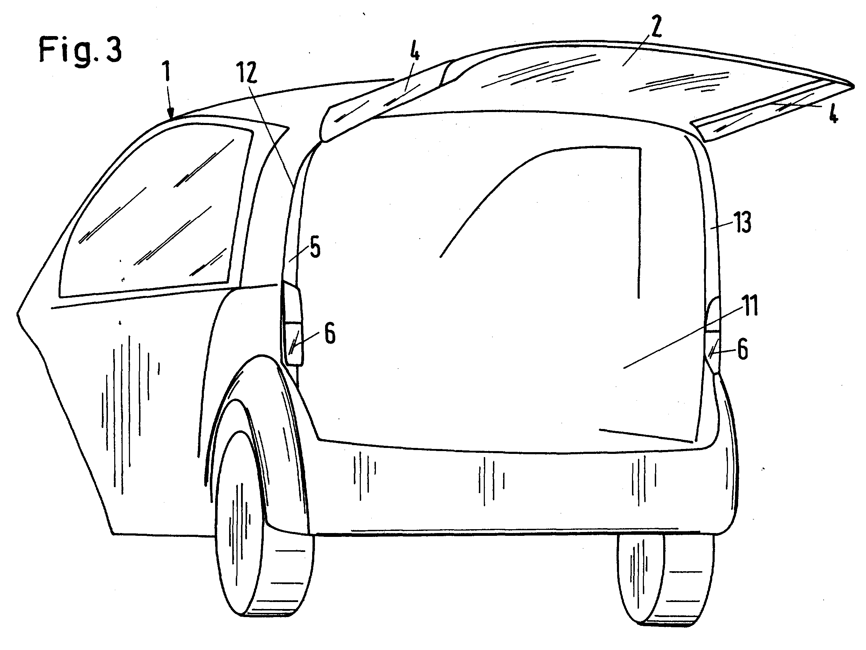

Die Fig. 2 und 3 zeigen ein Kraftfahrzeug 1 mit einer Heckklappe 2, die am oberen Rand am Kraftfahrzeug angelenkt ist und die verhältnismäßig weit nach unten reicht. An beiden Längsseiten 7, 8 der Heckklappe 2 ist jeweils eine Heckleuchte 4 vorgesehen, die sich vom oberen Rand 9 der Heckklappe 2 bis nahezu zum unteren Rand 10 der Heckklappe 2 erstreckt. Mit der Heckklappe 2 wird die Ladeöffnung 11 des Kraftfahrzeuges 1 geschlossen.

Zum Beladen des Kofferraums wird die Heckklappe 2, wie sich aus Fig. 3 ergibt, um den oberen Rand nach oben geschwenkt. Da die Heckleuchten 4 in die Heckklappe 2 integriert sind, werden sie nach oben mitgenommen. Am Öffnungsrand 5 der Ladeöffnung 11 befinden sich an beiden Längsrändern 12 und 13 die Sicherheitsleuchten 6, die vorteilhaft gleich ausgebildet sind und jeweils ein Blinklicht und ein Schlußlicht aufweisen. Die Breite dieser beiden Sicherheitsleuchten 6 entspricht vorteilhaft der Breite der Längsränder 12, 13 der Ladeöffnung 11. Aufgrund dieser Sicherheitsleuchten 6, die zusätzlich zu den Heckleuchten 4 vorgesehen sind, kann die Ladeöffnung 11 nahezu über die gesamte rückwärtige Breite des Kraftfahrzeuges 1 vorgesehen sein. Dadurch hat die Ladeöffnung 11 einen maximalen Öffnungsquerschnitt, so daß der Kofferraum des Kraftfahrzeuges 1 mühelos beladen werden kann. Wird die Heckklappe 2 wieder geschlossen (Fig. 2), sind die beiden Sicherheitsleisten 6 von außen nicht sichtbar, sondern werden durch die Ränder der Heckklappe 2 verdeckt.

Die Heckklappe 2 besteht vorteilhaft weitgehend aus Glas bzw. durchsichtigem Kunststoff. Sie kann selbstverständlich auch aus jedem anderen geeigneten Material bestehen.

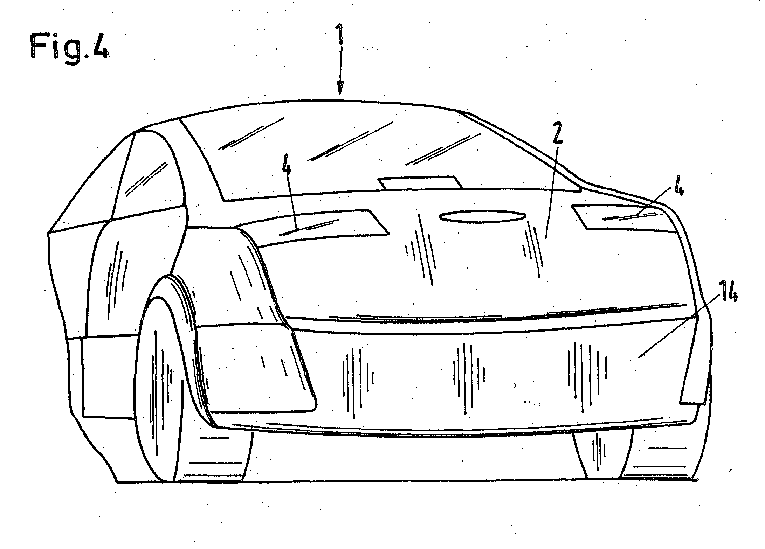

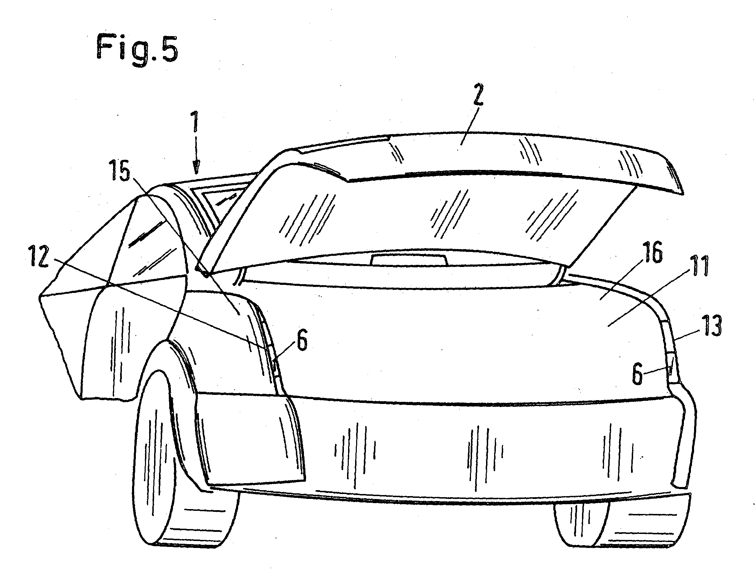

Das Kraftfahrzeug 1 gemäß den Fig. 4 und 5 hat ein Stufenheck. Der Kofferraumdeckel 2 ist nach unten bis etwa in Höhe der rückwärtigen Stoßstange 14 heruntergezogen. Am Übergang vom etwa horizontalen zum nach unten verlaufenden Teil des Kofferraumdeckels 2 sind zu beiden Seiten die Heckleuchten 4 vorgesehen, die in den Kofferraumdeckel 2 integriert sind.

Zum Öffnen wird der Kofferraumdeckel 2 des Kofferraums nach oben geklappt (Fig. 5), wobei die beiden Heckleuchten 4 mitgenommen werden. Bei hochgeklapptem Kofferraumdeckel 2 werden die an den Längsrändern 12, 13 der Ladeöffnung 11 befindlichen Sicherheitsleuchten 6 freigegeben. Sie strahlen ihr Licht, wie bei den vorhergehenden Ausführungsformen, nach hinten ab, so daß die Verkehrsteilnehmer das parkende Kraftfahrzeug 1 bei eingeschalteten Sicherheitsleuchten 6 zuverlässig erkennen können. Wie sich aus Fig. 5 ergibt, erstreckt sich der Kofferraumdeckel 2 nahezu über die gesamte Breite des Kraftfahrzeuges im Heckbereich. Dadurch hat die Ladeöffnung 11 ihre maximale Größe. Die Ladeöffnung 11 wird seitlich von den hinteren Seitenwänden 15, 16 der Karosserie des Kraftfahrzeuges 1 begrenzt. Die Breite der Sicherheitsleuchten 6 entspricht der Breite des entsprechenden Längsrandes 12, 13 der Ladeöffnung 11. Wie bei den vorigen Ausführungsformen steht darum die Sicherheitsleuchte 6 weder seitlich nach außen noch seitlich nach innen über den Öffnungsrand 12, 13 vor. Die Sicherheitsleuchten 6 haben jeweils ein Schlußlicht und ein Blinklicht, die entsprechend den vorigen Ausführungsformen übereinander angeordnet sind.

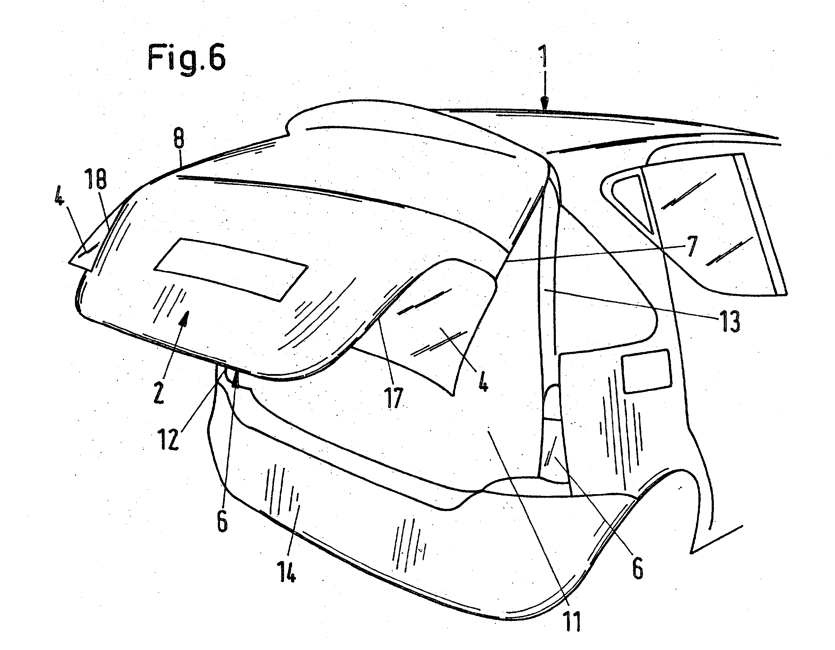

Während bei der vorigen Ausführungsform die Heckleuchten 4 innerhalb der Fläche des Kofferaumdeckels 2 angeordnet sind, sind die Heckleuchten 4 beim Ausführungsbeispiel nach Fig. 6 an die Seitenränder 8, 9 des Kofferraumdeckels 2 angeschlossen. Die Seitenränder 8, 9 des Kofferraumdeckels 2 sind dementsprechend mit einer seitlichen Ausbuchtung 17, 18 versehen, in die die Heckleuchten 4 eingesetzt sind. Sie sind so ausgebildet, daß sie annähernd eine stetige Fortsetzung des Kofferraumdeckels 2 im Bereich seiner Längsseiten 7, 8 bilden. Der Kofferraumdeckel 2 überragt mit seinem mittleren Teil die beiden Heckleuchten 4 nach unten. Da der Kofferraumdeckel 2 bis an die rückwärtige Stoßstange 14 reicht, kann der Kofferraum bequem beladen werden.

Wird der Kofferraumdeckel 2, der als Heckklappe ausgebildet und mit seinem oberen Rand am Kraftfahrzeug 1 angelenkt ist, geschlossen, dann überdecken die Heckleuchten 4 die an den Längsrändern 12, 13 der Ladeöffnung 11 vorgesehenen Sicherheitsleuchten 6. Sie erstrecken sich von der Stoßstange 14 aus aufwärts. Wie bei den vorherigen Ausführungsformen stehen die Sicherheitsleuchten 6 nicht seitlich nach innen oder nach außen über die Längsränder 12, 13 vor. Wegen der Sicherheitsleuchten 6 können die gesamten Heckleuchten 4 am Kofferraumdeckel 2 vorgesehen sein, ohne daß die Verkehrssicherheit gefährdet ist.

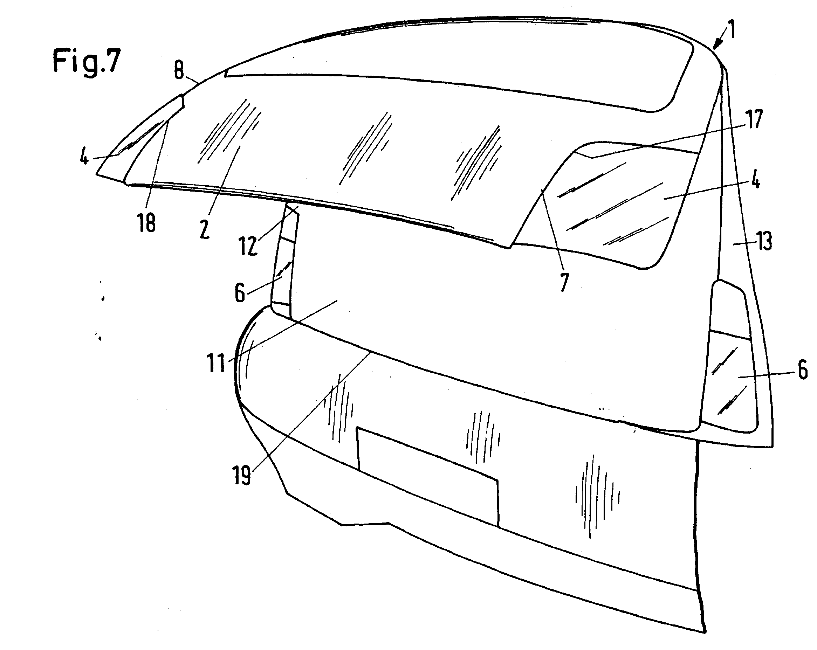

Bei der Ausführungsform nach Fig. 7 ist der Kofferraumdeckel 2, der ebenfalls als Heckklappe ausgebildet ist, an seinen Längsseiten 7, 8 mit jeweils einer Ausnehmung 17, 18 versehen, in die die Heckleuchten 4 eingesetzt sind. Sie bilden im wesentlichen eine stetige Fortsetzung des Kofferraumdeckels 2 im Bereich der Ausnehmungen 17, 18. In die beiden Längsränder 12, 13, welche die Ladeöffnung 11 seitlich begrenzen, sind die Sicherheitsleuchten 6 integriert. Sie erstrecken sich von der unteren Ladekante 19 des Kofferraums aus nach oben. Wird der Kofferraumdeckel 2 geschlossen, werden die Sicherheitsleuchten 6 durch die Heckleuchten 4 verdeckt. Durch die Sicherheitsleuchten 6, die nach hinten abstrahlen, ist wiederum gewährleistet, daß bei geöffnetem Kofferraumdeckel 2 das parkende Fahrzeug 1 bei eingeschalteten Sicherheitsleuchten von den übrigen Verkehrsteilnehmern erkannt werden kann. Da die kompletten Heckleuchten 4 Teil des Kofferraumdeckels 2 sind, hat die Ladeöffnung 11 eine maximale Breite, so daß der Kofferraum bequem beladen werden kann.

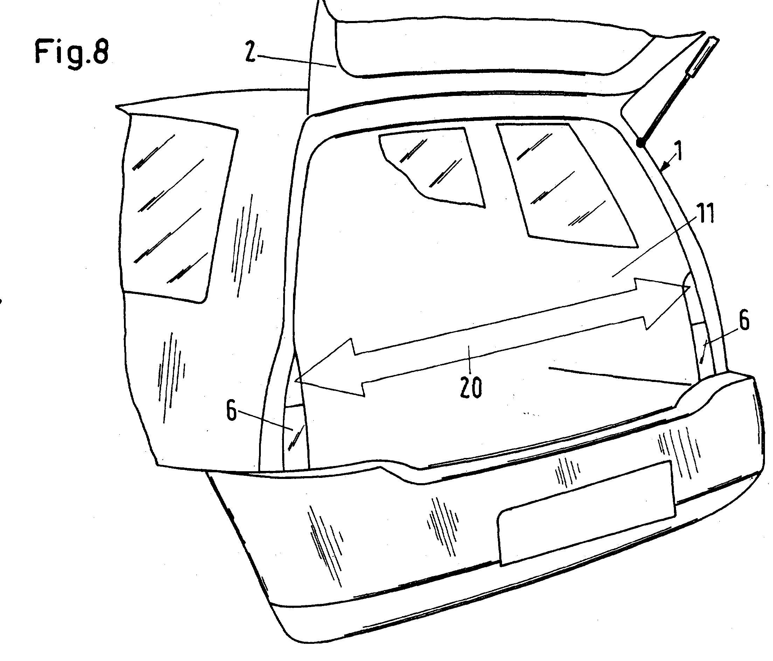

Fig. 8 zeigt schematisch diese maximale Breite 20 der Ladeöffnung 11. Wegen der Sicherheitsleuchten 6 können die Heckleuchten vollständig in den Kofferraumdeckel 2 integriert bzw. an ihm vorgesehen sein. Die Ladeöffnung 11 erstreckt sich somit zwischen den beiden Seitenteilen des Kraftfahrzeuges 1. Die Ladeöffnung 11 kann somit optimal zum Beladen des Kofferraumes ausgenutzt werden.

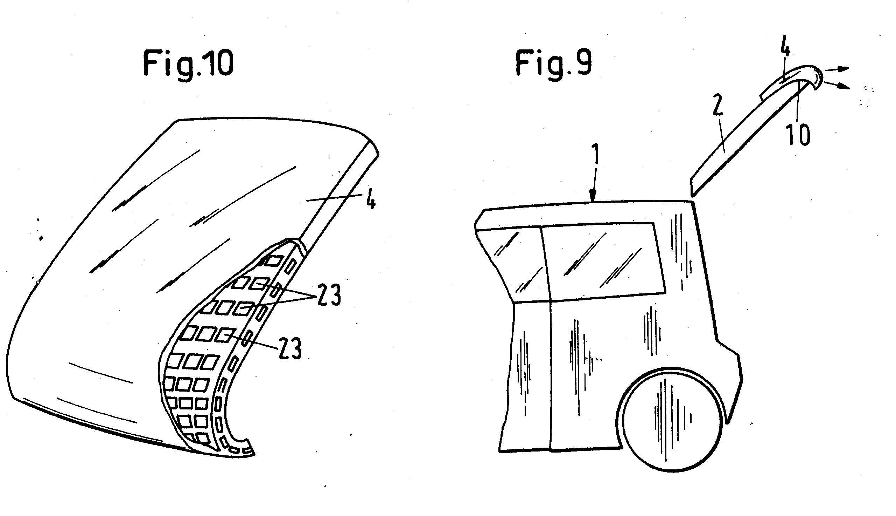

Die Fig. 9 und 10 zeigen eine Ausführungsform, bei der die Heckleuchten 4 des Kraftfahrzeuges 1 so ausgebildet sind, daß sie bei geöffnetem Kofferraumdeckel 2 auch eine Sicherheitsfunktion ausüben können. Der Kofferraumdeckel 2, der als Heckklappe ausgebildet ist, ist im Bereich seines unteren Randes 10 mit den Heckleuchten 4 versehen. Sie sind auf den Kofferraumdeckel 2 aufgesetzt und um den unteren Querrand 10 des Kofferraumdeckels 2 herumgezogen. Innerhalb der Heckleuchte 4 sind Leuchtmittel 23 untergebracht, welche die entsprechenden Leuchtfunktionen erfüllen. Diese Leuchtmittel 23 können beispielsweise LEDs sein, die entsprechend der jeweiligen Signalfunktion eingefärbt sind. Diese Leuchtmittel 23 sind bis zum unteren Rand der Heckleuchte 4 vorgesehen. Die Heckleuchte 4 hat in Ansicht etwa rechteckigen Umriß. Wie die Seitenansicht zeigt, ist die Heckleuchte 4 im unteren Bereich teilkreisförmig so gebogen, daß sie über den unteren Querrand 10 des Kofferraumdeckels 2 ragt. Wird der Kofferraumdeckel 2 geöffnet (Fig. 9), können die in der Heckleuchte 4 befindlichen Leuchtmittel 23 wegen des über den Querrand 10 überstehenden und ihn auch teilweise übergreifenden Randbereiches Licht nach hinten abstrahlen. Die Heckleuchten 4 üben somit bei geöffnetem Kofferraumdeckel 2 auch eine Sicherheitsfunktion aus, da infolge des nach hinten abgestrahlten Lichtes ein parkendes Fahrzeug von den Verkehrsteilnehmern einwandfrei erkannt werden kann. Da die Heckleuchte 4 vollständig auf dem Kofferraumdeckel 2 vorgesehen ist, hat die Ladeöffnung wiederum eine maximale Breite, die nicht durch Teile von Heckleuchten eingeschränkt wird.

## Patentansprüche

1. Leuchtenanordnung für Kraftfahrzeuge, die einen Kofferraumdeckel bzw. eine Heckklappe aufweisen und mit Heckleuchten versehen sind,
dadurch gekennzeichnet, daß die Heckleuchten (4) am Kofferraumdeckel (2) bzw. an der Heckklappe vorgesehen sind, und daß die Leuchtenanordnung so ausgebildet ist, daß sie bei geöffnetem Kofferraumdeckel (2) bzw. geöffneter Heckklappe Licht nach hinten abstrahlt.

2. Leuchtenanordnung nach Anspruch 1,
dadurch gekennzeichnet, daß die Leuchtenanordnung wenigstens eine, vorzugsweise an einem vorteilhaft vertikalen karosserieseitigen Rand (12, 13) einer in den Kofferraum führenden Ladeöffnung (11) vorgesehene Sicherheitsleuchte (6) aufweist, die bei geschlossenem Kofferraum verdeckt ist.

3. Leuchtenanordnung nach Anspruch 2,
dadurch gekennzeichnet, daß an beiden vertikalen karosserieseitigen Längsrändern (12, 13) der Ladeöffnung eine Sicherheitsleuchte (6) vorgesehen ist, die vorteilhaft wenigstens ein Schlußlicht und/oder wenigstens ein Blinklicht aufweist.

4. Leuchtenanordnung nach Anspruch 3,
dadurch gekennzeichnet, daß das Schlußlicht und das Bremslicht übereinander in der vorteilhaft bei geschlossenem Kofferraum durch den Kofferraumdeckel (2) bzw. die Heckklappe verdeckte Sicherheitsleuchte (6) angeordnet sind.

5. Leuchtenanordnung nach einem der Ansprüche 2 bis 4,
dadurch gekennzeichnet, daß die Sicherheitsleuchte (6) durch die am Kofferraumdeckel (2) bzw. an der Heckklappe vorgesehene Heckleuchte (4) verdeckt ist.

6. Leuchtenanordnung nach einem der Ansprüche 1 bis 5,
dadurch gekennzeichnet, daß die Heckleuchten (4) in einer seitlichen Aussparung (17, 18) an den vertikalen Längsrändern (7, 8) des Kofferraumdeckels (2) bzw. der Heckklappe angeordnet sind.

7. Leuchtenanordnung nach einem der Ansprüche 1 bis 6,
dadurch gekennzeichnet, daß die Heckleuchten (4) in den Kofferraumdeckel (2) bzw. in die Heckklappe integriert sind, die vorzugsweise aus Kunststoff bestehen.

8. Leuchtenanordnung nach Anspruch 1,
dadurch gekennzeichnet, daß zumindest die eine Heckleuchte (4) um den unteren Querrand (10) des Kofferraumdeckels (2) bzw. der Heckklappe zumindest teilweise herumgezogen ist.

9. Leuchtenanordnung nach Anspruch 8,
dadurch gekennzeichnet, daß der untere Teil der Heckleuchte (4) etwa rechtwinklig abgebogen ist.

10. Leuchtenanordnung nach Anspruch 8 oder 9,
dadurch gekennzeichnet, daß die Heckleuchte (4) über ihre Fläche verteilt angeordnete Leuchtmittel (23), vorzugsweise LEDs, aufweist.
